Europäisches Patentamt

European Patent Office

Office européen des brevets

(11) Numéro de publication: **0 078 745**
**B1**

(12) **FASCICULE DE BREVET EUROPEEN**

(45) Date de publication du fascicule du brevet:
**10.04.85**

(51) Int. Cl.⁴: **B 23 D 36/00**

(21) Numéro de dépôt: **82402009.3**

(22) Date de dépôt: **29.10.82**

(54) **Dispositif de commande électrique d'une cisaille.**

(30) Priorité: **30.10.81 FR 8120393**

(43) Date de publication de la demande:
**11.05.83 Bulletin 83/19**

(45) Mention de la délivrance du brevet:
**10.04.85 Bulletin 85/15**

(84) Etats contractants désignés:
**AT BE CH DE FR GB IT LI LU NL SE**

(56) Documents cités:
**FR - A - 1 512 719**
**FR - A - 2 246 363**
**GB - A - 708 716**
**GB - A - 869 334**
**GB - A - 1 099 274**

(73) Titulaire: **CLESID S.A., 51 rue Sibert,
F-42403 Saint-Chamond (FR)**

(72) Inventeur: **Mornas, Jean-Philippe, 96 rue Antoine
Durafour, F-42100 Saint-Etienne (FR)**

(74) Mandataire: **Le Brusque, Maurice et al,
CREUSOT-LOIRE 15 rue Pasquier, F-75383 Paris
Cedex 08 (FR)**

ACTORUM AG

## Description

La présente invention se rapporte à un dispositif de commande électrique de cisaille rotative, plus spécialement destinée à la coupe de feuilles métalliques à la volée, c'est-à-dire sans arrêt du produit.

On connaît les cisailles pour coupe à longueur de produits plats à la volée comportant deux lames coupantes placées chacune sur un rotor cylindrique, les axes de ces deux rotors étant parallèles entre eux et au plan de la feuille à couper. La distance entre les axes des rotors et leur entraînement mécanique est telle que, durant une petite fraction de leur rotation, correspondant généralement à un angle de quelques degrés, les deux lames coupantes engrènent entre elles, provoquant l'action de cisaillage du produit qui circule entre ces rotors. Par ailleurs, le diamètre des rotors est tel que, hormis cette fraction de la rotation dont l'amplitude est appelée angle de coupe, le produit peut circuler librement sans les toucher ni l'un ni l'autre.

Les deux rotors équipant ces appareils connus sont entraînés à partir d'un moteur électrique à vitesse variable par l'intermédiaire d'un train d'engrenages de synchronisation. Ce moteur est en général un moteur shunt à courant continu, et sa tension d'alimentation, donc sa vitesse, est commandée en fonction de données relatives en particulier à la vitesse de défilement du produit et à la longueur des coupes à effectuer. Entre deux coupes, le moteur ralentit, s'arrête même quelque temps selon la longueur à couper, puis s'accélère jusqu'à ce que la vitesse périphérique des rotors au niveau des lames soit égale à la vitesse linéaire du produit.

Le problème est alors de définir le profil de vitesse à imprimer aux rotors de façon à obtenir à la fois la longueur coupée désirée et la synchronisation avec le produit dans l'angle de coupe.

Les solutions connues actuellement sont:

— soit partiellement ou totalement mécaniques, par exemple comme décrit dans le brevet FR-A N° 1512719, en ce sens que le réglage et la modulation de la vitesse sont obtenus par un système mécanique assez complexe à partir de l'entraînement du produit,

— soit entièrement électriques, par exemple comme décrit dans le brevet GB-A N° 1099274, l'entraînement des rotors étant indépendant de celui du produit, et un appareillage électronique définissant une relation convenable avec la vitesse du produit.

Le premier type de solution a l'inconvénient d'être coûteux pour les grosses installations: du fait des forts couples à transmettre et de la finesse des réglages à réaliser, les équipements sont très importants.

Le deuxième type de solution a l'inconvénient de donner des longueurs de coupe dépendant de la vitesse du produit, et surtout de la variation de celle-ci.

Le dispositif de commande électrique de cisaille rotative selon l'invention permet de remédier à ce dernier inconvénient tout en conservant la simplicité mécanique propre aux entraînements purement électriques. Il est du type comportant:

— un premier dispositif de mesure en continu du déplacement de la bande à couper en amont de la cisaille et fournissant un train d'impulsions dont le nombre est proportionnel audit déplacement,

— un second dispositif de mesure en continu du déplacement angulaire des rotors, fournissant également un train d'impulsions dont le nombre est proportionnel audit déplacement angulaire, et dimensionné de manière telle que le déplacement de la bande à couper correspondant à N impulsions du premier dispositif de mesure soit égal à la longueur de l'arc balayé par l'une des lames pour l'émission de N impulsions par ledit second dispositif de mesure,

— un dispositif de repérage de la position des rotors précédant immédiatement la coupe,

— une unité logique telle qu'un micro-ordinateur,

— un ensemble électronique chargé de créer, sous commande desdits dispositifs de mesure, dudit dispositif de repérage et de ladite unité logique, la référence de vitesse du dispositif d'alimentation électrique du moteur,

et il est caractérisé en ce que ledit ensemble électronique comporte:

— un premier dispositif de comptage-décomptage capable:

1) d'être initialisé au moment de l'impulsion de repérage à une valeur $(Lx - Ny)$ représentant, en nombre d'impulsions des deux dispositifs de mesure, la différence entre la longueur du produit à couper (soit $Lx$) et la circonférence d'un des rotors (soit $Ny$),

2) de compter, par exemple positivement, les impulsions représentant le déplacement angulaire des rotors, en sens inverse, donc négativement dans cet exemple, celles représentant le déplacement du produit à couper, et enfin positivement ou négativement selon un aiguillage orienté par l'unité logique, des impulsions, dites locales, créées par ladite unité logique,

— un deuxième dispositif de comptage-décomptage relié à un convertisseur numérique-analogique et à un amplificateur de mise à l'échelle, dont la sortie constitue la référence principale de vitesse du moteur, ou un dispositif analogue équivalent, capable:

1) d'être initialisé, à un instant défini par l'unité logique, à une valeur $M$ représentative de l'inverse de la valeur de l'accélération et décélération à donner aux rotors pour aboutir au synchronisme avec la bande au moment de la coupe, et dont la valeur est fixée par la règle suivante:

si $\vartheta\,0$ est l'angle de rotation des rotors correspondant à la phase précédant la coupe, dite phase de synchronisation, pendant laquelle les vitesses théoriques angulaire de rotation des rotors et linéaire de défilement de la bande sont égales,

si $\vartheta\,1$ est l'angle de rotation des rotors pendant la phase de coupe, ces angles étant exprimés en degrés, on prendra:

$$M = Ny \left(1 - \frac{\vartheta 0 + \vartheta 1}{360}\right)$$

2) de compter positivement ou négativement, selon le même aiguillage que celui mentionné ci-dessus et durant des périodes définies par l'unité logique, les impulsions représentant le déplacement du produit à couper,

— un dispositif de régulation agissant, sous commande de l'unité logique sur la référence de vitesse 1, définie par le convertisseur numérique-analogique, et dont l'entrée est représentative du nombre contenu dans ledit premier dispositif de comptage-décomptage, et en ce que l'unité logique décompose une rotation du rotor, dont le point de départ est matérialisé par l'impulsion de repérage en quatre phases successives pendant lesquelles:

I. lors de la première phase, dite phase de coupe, et pour l'angle $\vartheta 1$ de rotation des rotors, le dispositif de régulation est rendu inopérant, la consigne de vitesse se réduisant au signal fourni par l'amplificateur de mise à l'échelle qui fait suite au deuxième compteur, le premier compteur est initialisé à la valeur Lx − Ny, le second compteur est maintenu à la valeur M, et l'amplificateur de remise à l'échelle est ajusté une fois pour toutes, de sorte que les vitesses théoriques angulaire et linéaire des lames et du produit soient égales,

II. lors de la deuxième phase, au cours de laquelle le moteur est uniformément accéléré ou décéléré selon que la longueur du produit à couper est inférieure ou supérieure au développement du rotor:

a) le régulateur étant toujours inopérant et la tension de sortie du convertisseur numérique-analogique étant alors par construction proportionnelle au produit du contenu du deuxième compteur par la vitesse de défilement de la bande, ledit deuxième compteur est soit incrémenté, soit décrémenté, selon un test de signe appliqué au premier compteur à l'instant de la transition phase I/phase II, d'autant d'unités que le dispositif mesureur du déplacement du produit à couper crée d'impulsions, de sorte que le moteur est soumis à une accélération ou à une décélération constantes de valeur proportionnelle à 1/M,

b) le premier compteur est soit incrémenté soit décrémenté d'une unité à l'apparition de chaque impulsion locale δu émise par l'unité logique en réponse à la réception de chaque impulsion δx de déplacement du produit selon le critère suivant: si x est le nombre d'impulsions δx, non comptée l'impulsion actuelle, qui se sont présentées depuis le début de la deuxième phase, et si Σu est le nombre des impulsions locales créées par l'unité logique pendant le même laps de temps, il y aura émission d'une impulsion δu si:

$$\frac{1}{2} \cdot \frac{(x+1)^2}{M} \geqslant \Sigma u,$$

c) si le second compteur atteint la valeur 0, il est maintenu à cette valeur, de sorte que le moteur est arrêté, et par ailleurs l'émission des impulsions locales est arrêtée,

d) la fin de la deuxième phase et le début de la phase suivante sont prononcés par l'unité logique lorsque le premier compteur atteint la valeur 0,

III. lors de la troisième phase, tout se passe de manière à réaliser une symétrie totale avec le mouvement d'accélération ou de décélération réalisé en phase II, l'unité logique émettant des impulsions locales maintenant théoriquement le premier compteur à 0, le second compteur variant en sens inverse de sa variation en phase II et, par ailleurs, le régulateur, rendu opérant, agissant également de manière à maintenir effectivement le premier compteur à 0; la fin de la phase III et donc le début de la phase IV sont prononcés lorsque le nombre affiché dans le second compteur est redevenu égal à M, le déplacement du produit à couper observé durant la troisième phase étant égal ainsi à celui effectué durant la deuxième phase mis à part la longueur du produit ayant défilé pendant que le deuxième compteur était verrouillé à 0,

IV. la quatrième et dernière phase, dite phase de synchronisation, est identique à la première phase mais, en outre, le régulateur est laissé en action et continue à agir de manière à maintenir effectivement le premier compteur à 0.

L'invention sera mieux comprise à l'aide de la description suivante d'un exemple préférentiel de réalisation, en référence aux dessins annexés dans lesquels:

— la fig. 1 est une représentation schématique d'une cisaille rotative et de ses dispositifs électroniques les plus proches et connus de commande de son moteur électrique,

— la fig. 2 est une représentation schématique du dispositif électronique de commande conforme à l'invention destiné à être connecté aux éléments déjà connus de la fig. 1,

— la fig. 3 est une représentation schématique d'un dispositif facultatif dit de préinformation de courant pouvant se brancher sur le dispositif de la fig. 2 et permettant de réduire la période transitoire d'établissement du courant électrique dans le moteur.

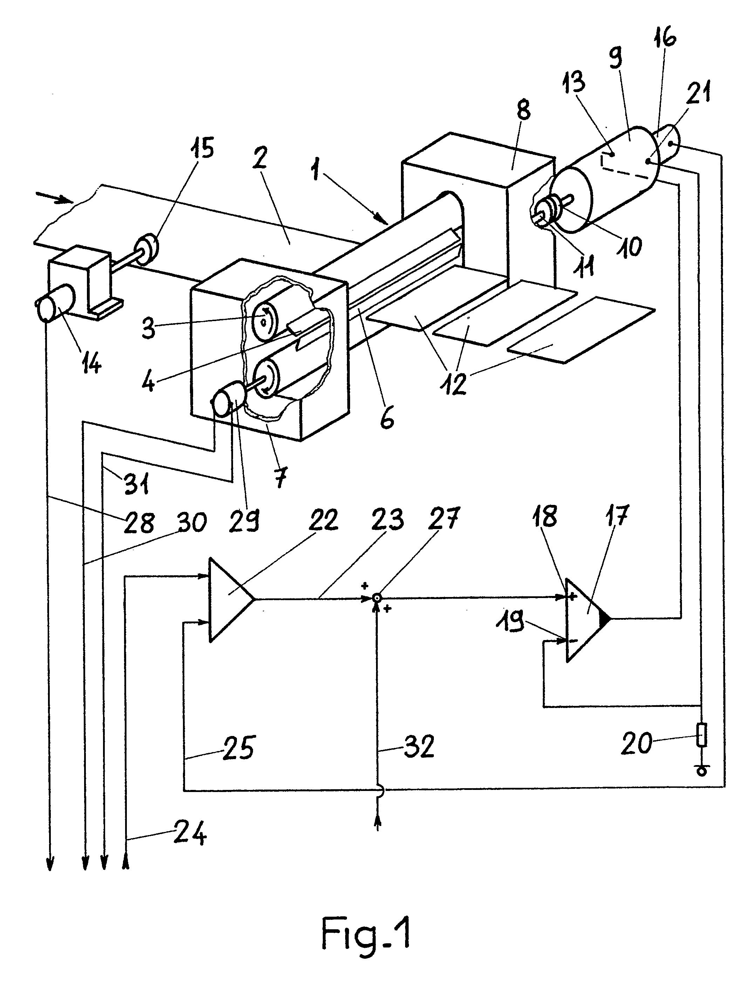

On reconnaît sur la fig. 1 une cisaille rotative 1 pour coupe à longueur d'une bande métallique 2 défilant continûment. De manière classique, la cisaille comporte:

— un rotor supérieur 3 portant le couteau supérieur 4,

— un rotor inférieur 5 portant le couteau inférieur 6,

— un premier carter d'extrémité 7 renfermant en particulier les organes de soutien, ou montants, non apparents sur cette figure, des rotors 3 et 5,

— un deuxième carter d'extrémité 8 renfermant les engrenages de synchronisation des rotors l'un par rapport à l'autre, les montants, ainsi que les dispositifs mécaniques de rattrapage des jeux, tous ces dispositifs étant bien classiques pour ce genre d'appareil,

— un moteur électrique à courant continu 9 à excitation parallèle, qui assure, par l'intermédiaire d'un accouplement 10 et d'un arbre 11, l'entraînement desdits engrenages et, par suite, des rotors 3 et 5.

Comme on le voit sur le dessin, le produit 2 entre par la gauche de la cisaille 1 et ressort à droite sur le schéma, partagé en coupes 12 de longueurs égales.

Le moteur 9 est un moteur à vitesse variable, dépendant de son courant d'induit, c'est-à-dire, en pratique, de la tension appliquée sur sa borne d'alimentation 13. Cette tension est déterminée par un circuit de commande et de régulation comportant en particulier un circuit 17 de régulation d'intensité et d'alimentation électrique du moteur 9, tel qu'un circuit à diodes commandées, disponible dans le commerce, dont la sortie est branchée à la borne 13 d'alimentation du moteur, et muni d'une première entrée 18 recevant une tension de référence et d'une seconde entrée 19 recevant une tension électrique représentant la mesure de l'intensité du courant d'induit du moteur, mesure effectuée par exemple à l'aide d'un shunt 20 placé en série dans le circuit de retour du courant d'induit du moteur.

La référence d'intensité est fournie par un circuit classique de régulation de vitesse 22, qui délivre sur sa sortie 23 une tension électrique, laquelle constitue ladite référence pour le régulateur 17.

Le régulateur de vitesse 22 reçoit, d'une part, sur le fil 25, une tension électrique représentant la vitesse effective du moteur, tension fournie par une dynamo tachymétrique 16 accouplée au moteur 9 et, d'autre part, sur le fil 24, une tension électrique représentant la consigne de l'asservissement de vitesse.

Cet ensemble est connu et facilement disponible dans le commerce sous différentes dénominations telles que Jistor de la société Jeumont Schneider, ou R12TO XB de la Compagnie Electro-Mécanique.

Par ailleurs, l'installation comprend deux générateurs d'impulsions, de préférence de type bidirectionnel:

— un premier générateur 14 est entraîné par un galet mesureur 15, lui-même entraîné par pression sur le produit 2; il fournit ainsi, lorsque le produit 2 se déplace, un train d'impulsions sur le fil 28 dont le nombre est proportionnel au déplacement du produit. Ces impulsions seront dites δx par la suite;

— le second générateur 29 est entraîné par l'un des rotors de la cisaille; il fournit ainsi un train d'impulsions sur le fil 30 dont le nombre est proportionnel à la distance circonférentielle parcourue par les lames équipant chacun des rotors; ces impulsions seront dites δy par la suite.

Les générateurs 14 et 29 ainsi que le diamètre du galet mesureur sont choisis de façon qu'il y ait égalité entre la longueur du déplacement du produit 2 correspondant à une impulsion délivrée par le générateur 14 et la longueur de l'arc balayé par une des lames pour une impulsion délivrée par le générateur 29.

Enfin, le générateur 29 possède une piste auxiliaire qui délivre sur le fil 31 une seule impulsion par tour. On oriente le générateur 29 de façon que le front utile de cette impulsion précède légèrement le début de la coupe. Cette impulsion sera appelée drapeau par la suite.

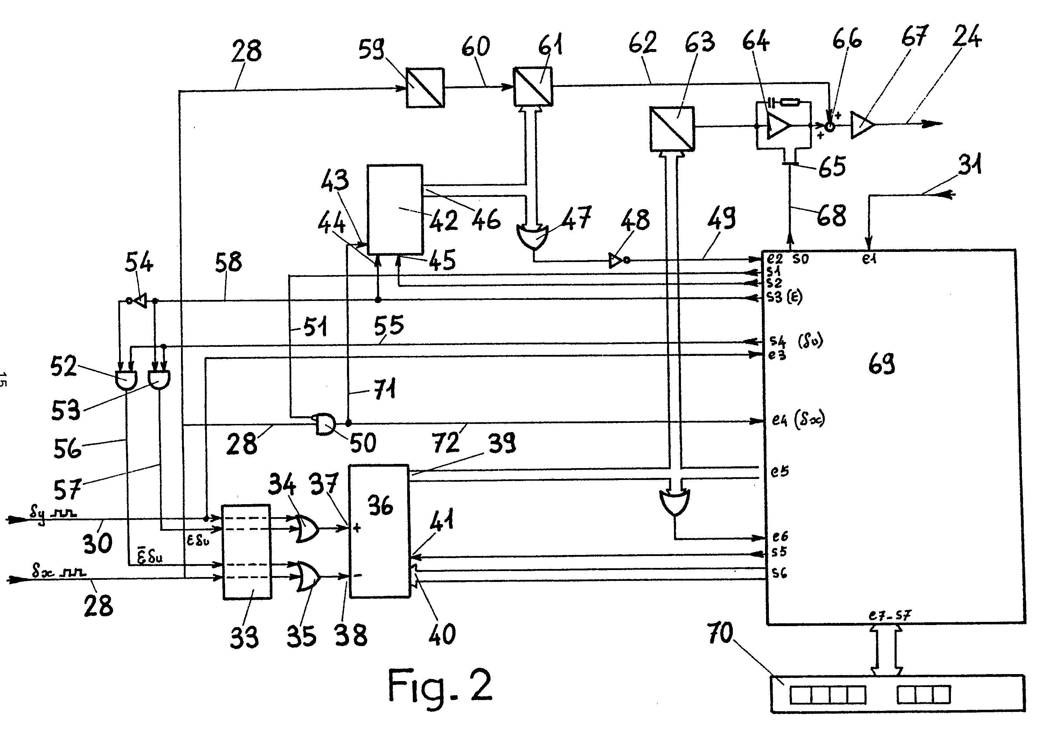

On reconnaît sur la fig. 2:

— les fils 24, 28, 30 et 31, prolongement des fils de même repère que sur la fig. 1,

— un dispositif 33 de levée de doute et mise en forme; ce dispositif comporte quatre entrées et quatre sorties; d'une part, il assure la mise en forme des créneaux entrants, c'est-à-dire qu'il les transforme en trains de brèves impulsions de même nombre; d'autre part, il assure un léger décalage de ces impulsions de façon qu'aucune d'entre elles ne soit simultanée; ce circuit fait généralement appel à une horloge de fréquence élevée,

— 34 et 35 sont des portes OU, qui réalisent la fonction d'addition logique des signaux présents sur leurs entrées,

— le circuit 36 est un compteur-décompteur binaire: les impulsions entrant par la borne 37 font augmenter l'état de ce compteur, alors que celles entrant par 38 font diminuer cet état; ce compteur est constamment connecté aux fils 28 et 30, à travers 33, 34 et 35; de ce fait, il accumule en permanence, positivement, les impulsions provenant du générateur d'impulsions entraîné par la cisaille 29 et, négativement, celles provenant du générateur d'impulsions entraîné par le produit 14.

39 est l'ensemble des bornes de sortie du compteur, c'est-à-dire sur lesquelles on peut lire l'état du compteur.

40 est au contraire l'ensemble des bornes de préaffichage du compteur. Ce préaffichage est activé par l'entrée 41: lorsque l'entrée 41 est dans un état logique donné, le compteur prend l'état défini par les états logiques de l'ensemble des entrées 40.

42 est un autre compteur, dont 43 est l'entrée des impulsions; 44 est une entrée compte/décompte, dont l'état logique présent sur le fil 58 définit le fonctionnement du compteur soit en compteur, soit en décompteur; 45 est une entrée d'activation du préaffichage (la valeur du préaffichage est déterminée par construction); 46 est l'ensemble des bornes de sortie sur lesquelles on peut lire l'état du compteur.

47 est une porte OU connectée à toutes les bornes de sortie 46, si bien que l'état logique du fil 49, connecté à la sortie de l'inverseur logique 48, est 1 lorsque le compteur 42 est à 0.

50 est une porte ET qui permet d'interrompre l'entrée des impulsions δx sur le fil 71 et, de là, sur le compteur 42, ainsi que sur le fil 72, selon le niveau logique du fil 51.

52 et 53 sont deux portes ET qui, grâce à l'inverseur logique 54, aiguillent les impulsions présentes sur le fil 55 soit sur le fil 57 et par suite sur l'entrée 37, compte, du compteur 36, soit sur le fil 58 et par suite sur l'entrée 38, décompte, du compteur 36, et cela selon l'état logique présent sur le fil 58.

59 est un convertisseur fréquence-tension dont la sortie 60 est par conséquent proportionnelle à la fréquence des créneaux présents sur le fil 28, c'est-à-dire en fin de compte à la vitesse du produit 2. On utilisera par exemple le module de référence 453 de la société Analog Devices.

61 est un convertisseur numérique-analogique tel que la tension électrique de sortie, présente sur le fil 62, est proportionnelle au produit de la tension électrique présente sur 60 par le nombre représenté par l'état de l'ensemble des sorties 46 du compteur 42. On utilisera par exemple le circuit intégré AD 7541 de la société Analog Devices.

Le fonctionnement de ces deux modules est tel que la tension sur le fil 62 est proportionnelle au produit de la vitesse du produit 2 par le nombre contenu dans le compteur 42.

Cette tension est acheminée, à travers l'additionneur 66 et un amplificateur de mise à l'échelle 67, sur le fil 24 qui est branché sur l'entrée référence du régulateur de vitesse 22.

63 est un convertisseur numérique-analogique dont la tension de sortie est proportionnelle au nombre représenté par l'état de l'ensemble 39 des sorties du compteur 36.

La sortie de 63 alimente un régulateur 64 dont la sortie s'additionne dans 66 à la tension présente sur le fil 62.

65 est un interrupteur statique qui permet de mettre à 0 la sortie du régulateur 64, pour un état logique donné sur le fil 68.

69 est un micro-ordinateur tel qu'on en trouve dans le commerce, par exemple le SBC 80/24 de la société Intel. On sait qu'un tel système peut recevoir et interpréter des signaux externes lorsqu'ils sont connectés à certaines bornes d'entrée et qu'il peut émettre des signaux sur ses bornes de sortie, et cela selon le déroulement de l'éxécution du programme qui a été chargé dans ses mémoires.

$e_1$, $e_2$, ... sont des bornes d'entrée.

$s_1$, $s_2$, ... sont des bornes de sortie.

Les fonctions de ces bornes sont les suivantes:

$e_1$ état du drapeau.

$e_2$ état du compteur 42: égal à ou différent de 0.

$e_3$ entrée des impulsions $\delta y$ présentes sur 30, caractérisant donc la rotation des rotors 3 et 5 de la cisaille.

$e_4$ entrée des impulsions $\delta x$ présentes sur 28, caractérisant donc le déplacement du produit 2.

$e_5$ ensemble d'entrées permettant le transfert en mémoire de l'état du compteur 36.

$e_6$ état du compteur 36: égal à ou différent de 0.

$e_7$ entrée d'informations venant du pupitre de commande 70 ou de tout autre moyen d'assurer la définition de la longueur de coupe désirée; nous supposerons cette information définie par l'état des roues codeuses placées dans le pupitre 70.

$s_0$ mise à 0 du régulateur 64.

$s_1$ inhibition du compteur 42.

$s_2$ préaffichage du compteur 42: l'activation de cette ligne force le compteur 42 à prendre un état donné, défini par construction.

$s_3$ état logique $\varepsilon$.

Cet état définit:

— l'état compte ou décompte du compteur 42,

— laquelle des deux lignes 56 ou 57 est active.

$s_4$ sortie des impulsions dites $\delta u$ acheminées par le fil 55.

$s_5$ commande de préaffichage du compteur 36.

$s_6$ ensemble de sorties qui reçoivent l'état initial que doit prendre le compteur 36 sur activation de son entrée 41.

$s_7$ sortie d'informations, par exemple pour visualisation sur le pupitre.

Le fonctionnement selon l'invention s'effectue de la façon suivante:

Si un cycle de marche correspond à l'intervalle de temps compris entre deux passages successifs du drapeau et admettant que, d'une façon ou d'une autre, le sens de rotation des rotors ne peut changer en cours de fonctionnement normal, tout cycle de marche est décomposé en quatre phases, chacune correspondant à un fonctionnement bien déterminé des éléments qui ont été mentionnés ci-dessus.

Ces fonctionnements sont déterminés par le micro-ordinateur 69 qui active ses lignes de sortie en conséquence, d'après son programme et l'état de ses lignes d'entrée.

Le détail des phases est le suivant:

*Phase I*

— Elle est initialisée par le passage du drapeau. Elle termine donc la phase IV du cycle précédent.

— Soit $L_x$ le nombre des impulsions correspondant à la longueur de coupe désirée et $N_y$ celui correspondant à un tour exact des rotors de la cisaille.

— A l'instant du passage du drapeau, l'état du compteur 36 est transféré en mémoire. Cette quantité est l'erreur commise sur la coupe qui va se produire juste après le passage du drapeau (le drapeau ne précède que de très peu la coupe). Ce nombre sera traité ultérieurement pour affichage sur le pupitre 70 de l'erreur ou toute autre utilisation dépendant des exécutions particulières de l'équipement.

Immédiatement après ce transfert, le compteur 36 est réinitialisé à une valeur égale à $L_x - N_y$ par les sorties $s_6$, ainsi que la ligne d'activation connectée à 41.

— Enfin, l'un des compteurs internes du microcalculateur est affecté au compte des impulsions de la ligne 30: la phase I sera terminée lorsqu'une valeur préétablie sera atteinte. Elle correspond à une rotation suffisante pour dégager les lames du produit coupé, de l'ordre de 20°.

— Durant toute cette phase, la ligne 68, correspondant à la sortie $s_0$, a été activée, imposant la mise à 0 du régulateur 64: la consigne de vitesse se réduit au signal présent sur le fil 62.

— Egalement, les sorties $s_1$ et $s_2$ sont activées, imposant au compteur 42 d'avoir et de conserver une valeur initiale prévue par construction. Soit M cette valeur initiale, qui sera définie avec plus de précision par la suite.

Dans ces conditions, le signal de consigne, présent sur le fil 62, et qui est proportionnel à la vitesse du produit 2, est calibré, en particulier par 67, de telle façon que la vitesse périphérique des lames soit égale à celle du produit. Nous l'appellerons vitesse de synchronisme.

En résumé, pendant la phase I:

— La consigne de vitesse des rotors est constante et égale à la vitesse de synchronisme. Pour ce faire, le compteur 42 est maintenu à une valeur constante prédéterminée. Soit M cette valeur.

— Sa durée correspond à une rotation angulaire définie des rotors.

— Le compteur 36 est initialisé à la valeur Lx — Ny.

— Il accumule positivement les impulsions provenant du générateur d'impulsions entraîné par la cisaille, et négativement celles provenant du générateur d'impulsions entraîné par le produit.

— La régulation 64 est inopérante.

*Phase II*

— A l'instant défini par le compteur du microcalculateur 69 et correspondant à une rotation des rotors ci-dessus:

— le microcalculateur lit l'état du compteur 36 et en déduit le signe de son contenu. Ce signe détermine l'état de la sortie s3, $\varepsilon$ (niveau logique du fil 58), selon la règle: le niveau logique $\varepsilon$ est 1 si le contenu du compteur 36 est négatif;

— les sorties s1 et s2 sont désactivées, ce qui libère le compteur 42, dont le compte augmente ou diminue selon l'état logique du fil 58 (niveau logique de $\varepsilon$);

— l'inhibition du régulateur 64 par la sortie e0 est maintenue.

— A chaque impulsion reçue en entrée e4 du microcalculateur, celui-ci répond par émission, ou non, d'une impulsion $\delta u$, dite locale, sur la sortie s4. Cette décision est prise selon le critère suivant: si x est le nombre des impulsions $\delta x$, non comptée l'impulsion actuelle, qui se sont présentées depuis le début de la phase II et si $\Sigma u$ est le nombre des impulsions locales créées par le microcalculateur durant le même laps de temps, il y aura émission d'une impulsion $\delta u$ si

$$\frac{1}{2} \cdot \frac{(x + 1)^2}{M} \geqslant \Sigma u,$$

M étant la valeur initiale imposée au compteur 42.

— Ces impulsions sont acheminées en compte (état logique $\varepsilon = 1$) ou décompte (état logique $\varepsilon = 0$) sur le compteur 36, à travers le circuit de levée de doute 33.

— La fin de la phase II est prononcée par le microcalculateur lorsque le compteur 36 atteint la valeur 0, ce qui provoque l'activation de l'entrée e6.

On peut vérifier que la définition de l'état logique $\varepsilon$ d'après le signe du contenu du compteur 36 et les actions provoquées d'après cet état ont effectivement pour effet de faire tendre le contenu du compteur 36 vers 0.

En effet, et par exemple pour une valeur initiale négative de 36, $\varepsilon = 1$, d'où:

· le contenu du compteur 42 augmente, et par suite la vitesse du rotor par l'effet de 59 et 61, donc les impulsions $\delta y$ (provenant de la cisaille) deviennent plus nombreuses que les impulsions $\delta x$ provenant du produit,

· les impulsions $\delta u$ s'ajoutent au compte de 36.

Ces deux effets sont concordants et concourent à augmenter algébriquement le contenu de 36; sa valeur, qui était initialement négative, tend donc vers 0.

Lorsque le choix de la longueur de coupe et les conditions de fonctionnement durant la phase I, c'est-à-dire le ralentissement dû à la coupe, font que l'état logique de $\varepsilon$ est 0 en phase II, le compteur 42 est décrémenté par l'avance du produit. Il est donc possible qu'il atteigne la valeur 0 et donc que le moteur 9 s'arrête.

Cette situation est détectée par la porte NOR 47, et un état logique 1 est envoyé sur l'entrée e2 du microcalculateur par le fil 49. Celui-ci réagit en envoyant un état logique 1 par sa sortie s1 sur le fil 51, ce qui interrompt l'arrivée des impulsions $\delta x$ sur le compteur 42, qui reste donc à 0, et sur l'entrée e4 du microcalculateur, qui cesse donc de créer des impulsions locales.

Le compteur 36 ne reçoit plus que des impulsions $\delta x$ par le fil 28, et cette situation se maintient jusqu'à ce qu'il atteigne la valeur 0. (En effet, les rotors de la cisaille étant arrêtés, il n'y a plus émission d'impulsions $\delta y$.)

En résumé, pendant la phase II:

— La consigne de vitesse des rotors est égale à la vitesse de synchronisme multipliée par un cœfficient qui est une fonction linéaire du déplacement du produit depuis l'origine de la phase:

$$1 \pm \frac{x}{M}$$

— L'état d'avancement de la phase est suivi en surveillant l'état du compteur 36, qui reçoit, en plus des impulsions $\delta x$ et $\delta y$, comme en phase I, des impulsions locales, créées de façon que leur somme représente, à une unité près, la quantité:

$$\frac{1}{2} \cdot \frac{x^2}{M}$$

— Ces impulsions locales $\delta u$ sont ajoutées ou retranchées, selon une loi de signe définie par le signe exhibé par le compteur 36 à l'origine de la phase.

— La même loi de signe s'applique au terme en x de la loi de variation de la vitesse.

Si, enfin, au cours de la phase, la consigne de vitesse devient nulle:

· d'une part, la consigne est maintenue à 0 jusqu'à la fin de la phase, ce qui maintient le moteur 9 arrêté,

· d'autre part, la création d'impulsions locales est interrompue.

La phase II se termine lorsque le contenu du compteur 36 est nul.

La régulation 64 est toujours inopérante.

*Phase III*

Le fonctionnement est très voisin du fonctionnement en phase II.

— L'état logique $\varepsilon$ est complémenté par rapport à la valeur qu'il avait en phase II.

— Le compteur 42 est libéré (niveau logique 0 sur le fil 51).

— A chaque impulsion incidente $\delta x$, le microcalculateur crée une impulsion locale $\delta u$, selon la

règle suivante: Si Nmax était le nombre des impulsions δx observées durant la phase II, la ième impulsion locale de la phase III est identique (c'est-à-dire présente ou absente) à l'impulsion de rang (Nmax − i + 1) de la phase précédente.

En pratique, on constitue, durant la phase II ou même une fois pour toutes, une table donnant la valeur des impulsions locales, en fonction du rang de l'impulsion incidente. Les impulsions locales en phase III sont obtenues en parcourant la même table, mais en sens inverse, c'est-à-dire partant de la dernière valeur définie en phase II pour revenir à l'origine de la table.

— Le régulateur 64 est libéré, c'est-à-dire que le signal envoyé par le microcalculateur sur le fil 68 supprime la conduction de l'interrupteur statique 65.

Par suite, à la consigne de vitesse, fournie par le convertisseur digital-analogique 61, sur le fil 62, s'ajoute en 66 un signal de correction. L'effet de cette action est d'altérer la vitesse du moteur de la cisaille de façon à maintenir nul le contenu du compteur 36.

— Ce mode de fonctionnement est maintenu jusqu'à ce que le compteur 42 soit revenu exactement à l'état qu'il avait durant la phase I, donc au début de la phase II. Cette coïncidence termine la phase III.

On peut résumer la phase III en disant qu'elle impose aux rotors un mouvement uniformément varié (si la vitesse du produit est constante), déduit du mouvement varié de la phase précédente au moyen des deux règles suivantes:

— l'accélération est exactement l'opposée de celle qui avait été programmée (mais non nécessairement réalisée) en phase II,

— la longueur du produit qui défile est exactement égale à celle qui a circulé, en phase II, durant le régime varié.

Le mouvement du rotor est dit imposé parce qu'il est maintenant commandé non plus par un asservissement de vitesse, mais par un asservissement de position.

*Phase IV*

Elle est analogue à la phase I, en ce qui concerne le fonctionnement:

— la ligne 51 est activée par s1, ce qui interrompt l'arrivée des impulsions sur 42,

— la sortie s2 peut être également activée pour confirmer l'état dans lequel la phase III a laissé ce compteur,

— par contre, la sortie s0 et la ligne 68 restent désactivées, laissant actif le régulateur 64.

Cela a pour effet de maintenir le compteur 36 à 0. On remarquera que, en fin de cycle, ce compteur 36 contiendra exactement l'erreur commise sur la longueur de coupe. En effet:

· le nombre des impulsions locales créées en phases II et III est rigoureusement égal (cette égalité définit la fin de la phase III); les aiguillages 52 et 53 étant d'états opposés pendant ces deux phases, le total des impulsions locales enregistré par le compteur 36 est nul,

· le total des impulsions provenant de la cisaille est Ny puisqu'un cycle correspond à un tour exact des rotors,

· le total L des impulsions provenant du produit correspond à la longueur réelle coupée,

· le compteur 36 ayant été initialisé à Lx − Ny, et compte tenu du branchement des entrées, à la fin du cycle le contenu du compteur est Lx − L, c'est-à-dire égal, à une conversion d'unités près, à l'erreur de longueur.

On peut résumer la phase IV en disant que c'est une période de calage du rotor par rapport au produit, période pendant laquelle est corrigée l'erreur de position qui subsiste à la fin du régime varié de la phase précédente.

Cette phase a donc une importance considérable par rapport aux performances. Il faut lui laisser une durée suffisante. Cela est obtenu par le choix du nombre M.

On fixera sa valeur par la règle suivante:

si $\vartheta 0$ est l'angle minimal de rotation des rotors correspondant à la phase IV, $\vartheta 0$ est dit angle de synchronisation;

si $\vartheta 1$ est l'angle de rotation des rotors correspondant à la phase I (angle de coupe),

ces angles étant exprimés en degrés, on prendra:

$$M = Ny \left(1 - \frac{\vartheta 0 + \vartheta 1}{360}\right)$$

La régulation de longueur de coupe selon l'invention est finalement remarquable:

— en premier lieu, par le fait qu'on obtient, par des moyens purement électriques et électroniques, un positionnement des rotors de la cisaille dont la consigne ne dépend que de la position du produit (et absolument pas de l'époque), quelle que soit la vitesse de ce produit;

— ensuite, par le fait que, pendant une première partie du cycle de marche, à la suite de la coupe, le système de commande se borne à définir un profil souhaité de vitesse, mais en admettant que ce profil n'est qu'approximativement respecté; la suite du cycle est ainsi définie d'après la rotation réelle des rotors, et non d'après la prévision de cette rotation.

L'observation de la réalisation réelle du mouvement a lieu deux fois durant cette première partie du cycle:

— la première fois, après une rotation égale à l'angle de coupe; le système de commande choisit alors le type de correction nécessaire (accélération ou décélération),

— la deuxième fois est la définition du point d'inversion de l'accélération, qui tient compte des positions réelles respectives des rotors et du produit, pour définir un mouvement de poursuite dont l'erreur initiale est nulle.

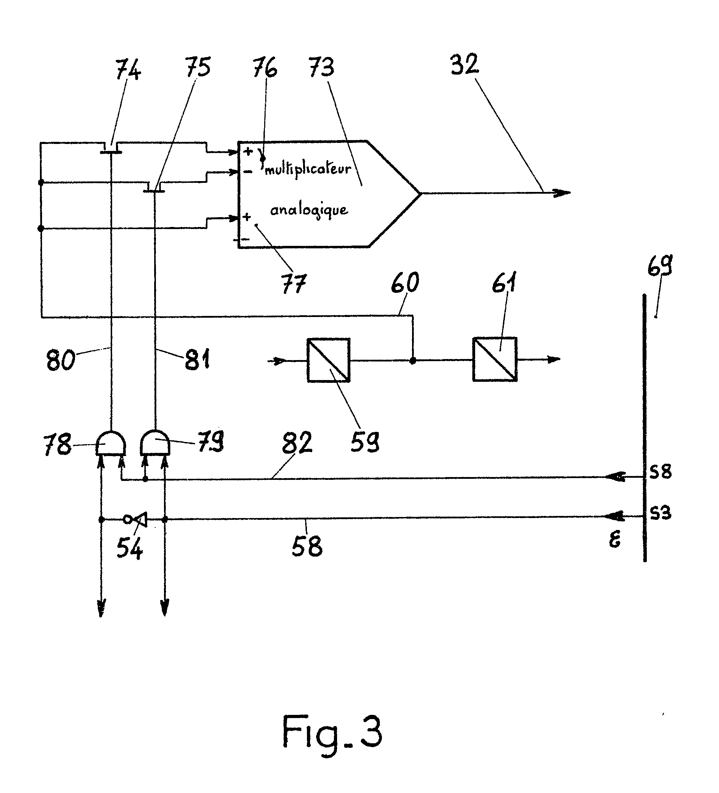

On se reportera enfin à la fig. 3, qui représente le dispositif facultatif de préinformation de courant destiné à être avantageusement relié au fil 32 de la fig. 1.

Sur cette figure, 74 et 75 sont des interrupteurs statiques. Ils commandent les entrées directes et inverses de la première voie 76 d'un multiplieur analogique 73. On utilisera par exemple le circuit intégré AD 532 de la société Analog Devices.

Les interrupteurs 74 et 75 sont commandés par les fils 80 et 81 respectivement, eux-mêmes connectés aux sorties des portes ET 78 et 79.

Ces portes sont commandées:

— d'une part, par le fil 58 (état logique ε) pour 79, ou par l'état complémentaire pour 78 (sortie de l'inverseur 54),

— d'autre part, par le fil 82, relié à une nouvelle sortie du microcalculateur, s8; cette sortie sera activée durant la durée de la phase III, et désactivée le reste du temps.

Les entrées des interrupteurs 74, 75 ainsi que l'entrée convenable de la deuxième voie 77, du multiplieur 73, sont toutes trois connectées au fil 60, sortie du convertisseur fréquence-tension 59. De ce fait, la tension de sortie de 73 est proportionnelle au carré de la vitesse du produit 2.

La sortie du multiplieur — après une éventuelle mise à l'échelle non représentée — est connectée au point d'addition 27 de la régulation d'intensité du moteur, à travers le fil 32.

On pourra vérifier que l'accélération du mouvement uniformément varié imposé en phase III est également proportionnelle au carré de la vitesse du produit. La consigne de courant qui est ainsi injectée en 27 provoque un couple d'accélération (en grandeur et signe) conforme à la consigne de vitesse présente sur le fil 24.

Cela réduit considérablement le transitoire d'établissement du courant dans le moteur, par suite le retard de la rampe de vitesse, donc enfin le retard de position du rotor sur sa consigne.


## Revendications

1. Dispositif de commande électrique de cisaille rotative (1), ladite cisaille comportant deux rotors superposés (3, 5) portant chacun une lame coupante (4, 6) et entraînés à vitesse variable par l'intermédiaire d'un moteur électrique (9), et ledit dispositif comportant:

— un premier dispositif (14, 15) de mesure en continu du déplacement de la bande (2) à couper en amont de la cisaille et fournissant un train d'impulsions de nombre proportionnel audit déplacement,

— un second dispositif (29) de mesure en continu du déplacement angulaire des rotors fournissant également un train d'impulsions de nombre proportionnel audit déplacement angulaire, et dimensionné de manière telle que le déplacement de la bande à couper correspondant à N impulsions du premier dispositif de mesure soit égal à la longueur de l'arc balayé par l'une des lames pour l'émission de N impulsions par ledit second dispositif de mesure,

— un dispositif (31) de repérage de la position des rotors précédant immédiatement la coupe,

— une unité logique telle qu'un micro-ordinateur (69),

— un ensemble électronique chargé de créer, sous commande desdits dispositifs de mesure, dudit dispositif de repérage et de ladite unité logique, la référence de vitesse du dispositif d'alimentation électrique du moteur,

caractérisé en ce que ledit ensemble électronique comporte:

— un premier dispositif de comptage-décomptage (36) capable:

1) d'être initialisé au moment de l'impulsion de repérage à une valeur (Lx − Ny) représentant, en nombre d'impulsions des deux dispositifs de mesure, la différence entre la longueur du produit à couper et la circonférence d'un des rotors,

2) de compter, par exemple positivement, les impulsions représentant le déplacement angulaire des rotors, en sens inverse, donc négativement dans cet exemple, celles représentant le déplacement du produit à couper, et enfin positivement ou négativement selon un aiguillage orienté par l'unité logique, des impulsions, dites locales, créées par ladite unité logique,

— un deuxième dispositif de comptage-décomptage (42) relié à un convertisseur numérique-analogique et à un amplificateur (67) de mise à l'échelle fournissant la référence de vitesse du moteur, ou un dispositif analogue équivalent, capable:

1) d'être initialisé, à un instant défini par l'unité logique, à une valeur M représentative de la valeur de l'inverse de l'accélération et décélération à donner aux rotors pour aboutir au synchronisme avec la bande au moment de la coupe, et dont la valeur est fixée par la règle suivante:

si $\vartheta 0$ est l'angle de rotation des rotors correspondant à la phase précédant la coupe, dite phase de synchronisation, pendant laquelle les vitesses théoriques angulaire de rotation des rotors et linéaire de défilement de la bande sont égales,

si $\vartheta 1$ est l'angle de rotation des rotors pendant la phase de coupe, ces angles étant exprimés en degrés, on prendra:

$$M = Ny \left(1 - \frac{\vartheta 0 + \vartheta 1}{360}\right)$$

2) de compter positivement ou négativement, selon le même aiguillage que celui mentionné ci-dessus et durant des périodes définies par l'unité logique, les impulsions représentant le déplacement du produit à couper,

— un dispositif de régulation (64) agissant, sous commande de l'unité logique, sur la référence de vitesse, et dont l'entrée est représentative du nombre contenu dans ledit premier dispositif de comptage-décomptage (36),

et en ce que l'unité logique décompose une rotation du rotor, dont le point de départ est matérialisé par l'impulsion de repérage en quatre phases successives pendant lesquelles:

I. lors de la première phase, dite phase de coupe, et pour l'angle $\vartheta 1$ de rotation des rotors, le dispositif de régulation est rendu inopérant, le premier compteur est initialisé à la valeur (Lx − Ny), le second compteur est maintenu à la valeur M, et l'amplificateur de remise à l'échelle est ajusté une fois pour toutes de sorte que les vitesses théoriques angulaire et linéaire des lames et du produit soient égales,

II. lors de la deuxième phase, au cours de laquelle le moteur est uniformément accéléré ou décéléré selon que la longueur du produit à couper est inférieure ou supérieure au développement du rotor:

a) le régulateur étant toujours inopérant et la tension de sortie du convertisseur numérique-analogique étant alors par construction proportionnelle au produit du contenu du deuxième compteur par la vitesse de défilement de la bande, ledit deuxième compteur est soit incrémenté, soit décrémenté, selon un test de signe appliqué au premier compteur à l'instant de la transition phase I/phase II, d'autant d'unités que le dispositif mesureur du déplacement du produit à couper crée d'impulsions, de sorte que le moteur est soumis à une accélération ou à une décélération constantes de valeur proportionnelle à 1/M,

b) le premier compteur est soit incrémenté soit décrémenté d'une unité à l'apparition de chaque impulsion locale δu émise par l'unité logique en réponse à la réception de chaque impulsion δx de déplacement du produit selon le critère suivant: si x est le nombre d'impulsions δx, non comptée l'impulsion actuelle, qui se sont présentées depuis le début de la deuxième phase, et si Σu est le nombre des impulsions locales créées par l'unité logique pendant le même laps de temps, il y aura émission d'une impulsion δu si:

$$\frac{1}{2} \cdot \frac{(x+1)^2}{M} \geqslant \Sigma u,$$

c) si le second compteur atteint la valeur 0, il est maintenu à cette valeur, de sorte que le moteur est arrêté, et par ailleurs l'émission des impulsions locales est arrêtée,

d) la fin de la deuxième phase et le début de la phase suivante sont prononcés par l'unité logique lorsque le premier compteur atteint la valeur 0,

III. lors de la troisième phase, tout se passe de manière à réaliser une symétrie totale avec le mouvement d'accélération ou de décélération réalisé en phase II, l'unité logique émettant des impulsions locales maintenant théoriquement le premier compteur à 0, le second compteur variant en sens inverse de sa variation en phase II et, par ailleurs, le régulateur, rendu opérant, agissant également de manière à maintenir effectivement le premier compteur à 0; la fin de la phase III et donc le début de la phase IV sont prononcés lorsque le nombre affiché dans le second compteur est redevenu égal à M, le déplacement du produit à couper observé durant la troisième phase étant égal à celui effectué durant la deuxième phase, excepté la période durant laquelle la référence de vitesse du moteur est nulle,

IV. la quatrième et dernière phase, dite phase de synchronisation, est identique à la première phase mais, en outre, le régulateur est laissé en action et continue à agir de manière à maintenir effectivement le premier compteur à 0.

2. Dispositif de commande électrique de cisaille rotative selon la revendication 1, caractérisé en ce qu'il comporte en outre un dispositif de préinformation de courant permettant d'ajouter au signal de référence de courant un signal correcteur proportionnel au carré de la vitesse du produit à couper, de façon à engendrer un couple d'accélération correspondant à une variation de vitesse imposée par l'unité logique (fig. 3).

**Patentansprüche**

1. Vorrichtung zur elektrischen Steuerung einer Rotationsschere (1), welche zwei übereinanderliegende Rotoren (3, 5) umfasst, die jeweils ein Schneidmesser (4, 6) tragen und mittels eines elektrischen Motors (9) mit variabler Geschwindigkeit angetrieben werden, welche Vorrichtung umfasst:

— eine erste Vorrichtung (14, 15) zur ständigen Messung der Verschiebung des zu schneidenden Bandes (2) stromaufwärts der Schere und zur Abgabe fortlaufender Impulse, deren Anzahl zu der genannten Verschiebung proportional ist,

— eine zweite Vorrichtung (29) zur ständigen Messung der Winkelverschiebung der Rotoren, die gleichfalls fortlaufende Impulse mit einer zur Winkelverschiebung proportionalen Anzahl abgibt und so dimensioniert ist, dass die Verschiebung des zu schneidenden Bandes, die N Impulsen der ersten Messvorrichtung entspricht, gleich der Länge des von einem der Messer überstrichenen Bogens für die Abgabe von N Impulsen durch diese zweite Messvorrichtung ist,

— eine Vorrichtung (31) zur Ortung bzw. Markierung der Position der Rotoren, die dem Schnitt bzw. dem Schneidvorgang unmittelbar vorangeht,

— eine Logikeinheit wie z. B. ein Mikrokomputer (69),

— eine elektronische Einrichtung mit der Aufgabe, gemäss der Steuerung durch die genannten Messvorrichtungen, die Ortungs- bzw. Markierungsvorrichtung und die genannte Logikeinheit die Bezugsgeschwindigkeit der Stromversorgungseinrichtung des Motors zu liefern, dadurch gekennzeichnet, dass sie umfasst:

— eine erste Vorrichtung zum Zählen, d. h. zum Hinauf- und Herunterzählen, die geeignet ist:

1) aktiviert bzw. gestartet zu werden im Augenblick eines Ortungs- bzw. Markierungsimpulses mit einem Wert (Lx − Ny), der nach der Anzahl der Impulse der beiden Messvorrichtungen die Differenz zwischen der Länge des zu schneidenden Produktes und dem Umfang eines der Rotoren darstellt,

2) die Impulse z. B. positiv zu zählen, die die Winkelverschiebung der Rotoren darstellen und, im umgekehrten Sinn, also in diesem Beispiel jene negativ zu zählen, die die Verschiebung des zu schneidenden Produktes darstellen, und schliesslich positiv oder negativ, je nach einer durch die Logikeinheit orientierten (Impuls-)Weiche bzw. Verzeigung sogenannte lokale Impulse zu zählen, die durch die Logikeinheit erzeugt werden,

— eine zweite Vorrichtung zum Zählen (42), d. h. zum Hinauf- und Herunterzählen, die an einen numerisch-analogen Umwandler und an einen Verstärker (67) mit Skaleneinstellung bzw. -einteilung angeschlossen ist, der die Bezugsgeschwindigkeit des Motors liefert, oder eine entsprechende analoge Vorrichtung, die fähig ist:

1) in einem von der Logikeinheit bestimmten Augenblick mit einem Wert M aktiviert zu werden, der den Kehrwert der Beschleunigung bzw. Verzögerung darstellt, der die Rotoren zu unterwerfen sind, um im Augenblick des Schneidens zur Synchronisierung mit dem Band zu führen, und deren Wert durch die folgende Regel fixiert ist:

wenn $\vartheta\,0$ der Drehwinkel der Rotoren ist, der der dem Schnitt vorangehenden, auch Synchronisationsphase genannten Phase entspricht, während der die theoretische Winkelgeschwindigkeit der Rotoren und die theoretische lineare Geschwindigkeit des Bandvorschubes gleich sind,

wenn $\vartheta\,1$ der Drehwinkel der Rotoren während der Schneidphase ist, wobei diese Winkel in Grad ausgedrückt werden, so wählt man

$$M = Ny\left(1 - \frac{\vartheta\,0 + \vartheta\,1}{360}\right)$$

2) die Impulse, die die Verschiebung des zu schneidenden Produktes darstellen, je nach derselben Weiche bzw. Verzweigung wie jene, die oben erwähnt wurde, und während den von der Logikeinheit bestimmten Zeitabschnitten positiv oder negativ zu zählen,

— eine Regelvorrichtung (64), die nach Steuerung durch die Logikeinheit auf die Bezugsgeschwindigkeit wirkt und deren Eingangsinformation repräsentativ für die in der genannten ersten Zählvorrichtung (36) enthaltene Zahl ist,

und dadurch, dass die Logikeinheit eine Umdrehung bzw. Drehung des Rotors, deren Start- bzw. Ausgangspunkt durch den Ortungs- bzw. Markierungsimpuls verkörpert ist, in vier aufeinanderfolgende Phasen aufgliedert bzw. zerlegt:

I. In der ersten Phase, Schneidphase genannt, wird für den Drehwinkel $\vartheta\,1$ der Rotoren die Regelvorrichtung wirkungslos gemacht, der erste Zähler wird bei bzw. mit dem Wert (Lx − Ny) aktiviert bzw. gestartet, der zweite Zähler wird auf dem Wert M gehalten, und der Verstärker wird mit Wiedereinstellung der Skala ein für allemal so justiert, dass die theoretische Winkelgeschwindigkeit und die theoretische lineare Geschwindigkeit der Messer und des Produktes gleich gross sind.

II. In der zweiten Phase, während der der Motor gleichförmig beschleunigt oder verzögert wird, je nachdem, ob die Länge des abzuschneidenden Produktes kleiner oder grösser als die Abwicklung des Rotors ist:

a) da der Regler noch immer wirkungslos ist und die Ausgangsspannung des numerisch-analogen Umwandlers aufgrund seiner Konstruktion proportional zu dem Produkt des Inhaltes des zweiten Zählers mit der Vorschubgeschwindigkeit des Bandes ist, wird dieser zweite Zähler entweder erhöht oder vermindert, je nach einem auf den ersten Zähler zum Zeitpunkt des Überganges von der Phase I zu der Phase II angewandten Vorzeichentest, um ebenso viele Einheiten wie die Vorrichtung zur Messung der Verschiebung des zu schneidenden Produktes Impulse erzeugt, so dass der Motor einer konstanten Beschleunigung oder einer konstanten Verzögerung mit dem zu 1/M proportionalen Wert unterzogen wird,

b) der erste Zähler wird entweder um eine Einheit beim Auftauchen jedes lokalen Impulses $\delta u$ erhöht oder vermindert, der von der Logikeinheit als Reaktion auf den Empfang jedes Impulses $\delta x$ der Verschiebung des Produktes nach dem folgenden Kriterium ausgesendet wird: wenn x die Anzahl der Impulse $\delta x$ ist, ohne den derzeitigen Impuls zu zählen, die sich seit Beginn der zweiten Phase gezeigt haben, und wenn $\Sigma u$ die Anzahl der lokalen, von der Logikeinheit während derselben Zeitdauer erzeugten Impulse ist, wird ein Impuls $\delta u$ ausgegeben, wenn

$$\frac{1}{2}\cdot\frac{(x+1)^2}{M} \geqslant \Sigma u,$$

c) wenn der zweite Zähler den Wert Null erreicht, wird er auf diesem Wert gehalten, so dass der Motor angehalten und ausserdem die Abgabe von lokalen Impulsen eingestellt wird,

d) das Ende der zweiten Phase und der Beginn der folgenden Phase wird von der Logikeinheit bestimmt, wenn der erste Zähler den Wert Null erreicht.

III. In der dritten Phase geschieht alles so, dass eine vollkommene Symmetrie mit der in der Phase II erzeugten Beschleunigungs- oder Verzögerungsbewegung erreicht wird, wobei die Logikeinheit lokale Impulse, die den ersten Zähler theoretisch auf Null halten, aussendet, wobei der zweite Zähler im umgekehrten Sinn zu der Variation in Phase II variiert, und wobei überdies der aktivierte bzw. wirksame Regler ebenfalls so agiert, dass er den ersten Zähler tatsächlich auf Null hält; das Ende der Phase III, und somit der Beginn der Phase IV, wird bestimmt, wenn die im zweiten Zähler angezeigte Zahl bzw. Anzahl wieder den Wert M erreicht hat, wobei die während der dritten Phase beobachtete bzw. eingehaltene Verschiebung des zu schneidenden Produktes gleich jener ist, die während der zweiten Phase erzielt wurde, ausgenommen die Zeitspanne, während der die Bezugsgeschwindigkeit des Motors Null ist.

IV. Die vierte und letzte Phase, auch Synchronisationsphase genannt, ist identisch mit der ersten Phase, überdies wird jedoch der Regler in Aktion gelassen, und er wirkt weiterhin so, dass er den ersten Zähler tatsächlich auf Null hält.

2. Vorrichtung zur elektrischen Steuerung einer Rotationsschere nach Anspruch 1, dadurch gekennzeichnet, dass sie überdies eine Vorrichtung der laufenden Vorinformation umfasst, die es gestattet, dem Bezugssignal des Stromes ein Korrektursignal hinzuzufügen, das dem Quadrat der Geschwindigkeit des zu schneidenden Produktes proportional ist, so dass es ein Beschleunigungsmoment erzeugt, das einer durch die Logikeinheit vorgeschriebenen Geschwindigkeitsänderung entspricht (Fig. 3).

**Claims**

1. Electrical control device for a rotary shear (1), the said shear including two rotors, one above the other (3, 5), each bearing a cutting blade (4, 6) and driven at variable speed by an electric motor (9), and the said device including:

— a first device (14, 15) for the continuous measurement of the movement of the strip (2) to be cut upstream of the shear and supplying a train of pulses the number of which is proportional to the said movement,

— a second device (29) for the continuous measurement of the angular movement of the rotors also supplying a train of pulses the number of which is proportional to the said angular movement, and dimensioned such that the movement of the strip to be cut corresponding with N pulses from the first measuring device is equal to the length of the arc swept by one of the blades for the transmission of N pulses by the said second measuring device,

— a device (31) for marking the position of the rotors immediately preceding the cut,

— a logic unit such as a microcomputer (69),

— an electronic assembly to create, under the control of the said measuring devices, the said marking device and the said logic unit, the speed reference of the electrical power supply device of the motor,

characterized in that the said electronic assembly includes:

— a first count up-count down device (36) capable of:

1) being initialized at the time of the marking pulse at a value (Lx − Ny) representing, as a number of pulses of the two measuring devices, the difference between the length of the product to be cut and the circumference of one of the rotors,

2) counting, for example positively, the pulses representing the angular movement of the rotors, in the opposite direction, therefore negatively in this example, those representing the movement of the product to be cut, and finally positively or negatively according to switching controlled by the logic unit, pulses called local created by the said logic unit,

— a second count up-count down device (42) connected to a digital-analog converter and to a scaling amplifier (67) providing the speed reference of the motor, or a similar equivalent device capable of:

1) being initialized, at a time defined by the logic unit, at a value M representing the inverse value of the acceleration and deceleration to be given to the rotors in order to result in synchronism with the strip at the moment of cutting, and the value of which is fixed by the following rule:

if $\vartheta_0$ is the angle of rotation of the rotors corresponding to the phase preceding the cut, called the synchronization phase, during which the theoretical angular speed of rotation of the rotors and linear speed of movement of the strip are equal,

if $\vartheta_1$ is the angle of rotation of the rotors during the cutting phase, these angles being expressed in degrees, we will take

$$M = Ny \left(1 - \frac{\vartheta_0 + \vartheta_1}{360}\right)$$

2) counting positively or negatively, according to the same switching as that mentioned above and during the periods defined by the logic unit, the pulses representing the movement of the product to be cut,

— a regulating device (64) acting, under the control of the logic unit, on the speed reference, and the input of which is representative of the number contained in the said first count up-count down device (36),

and in that the logic device divides up one rotation of the rotor, the start point of which is given by the marking pulse, into four successive phases during which:

I. during the first phase, called the cutting phase, and for the angle of rotation of the rotors $\vartheta_1$, the regulating device is rendered inoperative, the first counter is initialized at the value (Lx − Ny), the second counter is maintained at the value M, and the scaling amplifier is adjusted once and for all such that the theoretical angular and linear speeds of the blades and the product are equal,

II. during the second phase, during which the motor is uniformly accelerated or decelerated depending on whether the length of the product to be cut is less than or greater than the development of the rotor:

a) the regulator being still inoperative and the output voltage of the digital-analog converter then being by construction proportional to the product of the content of the second counter by the speed of movement of the strip, the said second counter is either incremented or decremented, depending on a sign test applied to the first counter at the moment of transition from phase I to phase II, by as many units as the number of pulses created by the device measuring the movement of the product to be cut, such that the motor is subjected to a constant acceleration or deceleration of value proportional to 1/M,

b) the first counter is either incremented or decremented by one unit on the appearance of each local pulse $\delta u$ transmitted by the logic unit in response to the reception of each product movement pulse $\delta x$ according to the following criterion: if x is the number of $\delta x$ pulses, not counting the present pulse, that have been presented since the start of the second phase, and if $\Sigma u$ is the number of local pulses created by the logic unit during the same lapse of time, a pulse $\delta u$ will be transmitted if

$$\frac{1}{2} \cdot \frac{(x + 1)^2}{M} \geqslant \Sigma u,$$

c) if the second counter reaches zero value, it is maintained at that value such that the motor is stopped, and the transmission of local pulses is also stopped,

d) the end of the second phase and the start of the next phase is indicated by the logic unit when the first counter reaches zero value,

III. during the third phase, everything happens in such a way as to produce total symmetry with the acceleration or deceleration movement produced

in phase II, the logic unit transmitting local pulses theoretically maintaining the first counter at zero, the second counter varying in the opposite direction to its variation in phase II, and also the regulator, rendered operative, also acting in such a way as to effectively maintain the first counter at zero; the end of phase III, and therefore the start of phase IV, is indicated when the number displayed in the second counter has again become equal to M, the movement of the product to be cut observed during the third phase being equal to that made during the second phase, except for the period in which the motor speed reference is null,

IV. the fourth and last phase, called the synchronization phase, is identical with the first phase, but in addition the regulator is left in operation and continues to act in such a way as to effectively maintain the first counter at zero.

2. Electrical control device for a rotary shear according to Claim 1, characterized in that it also includes a current pre-information device enabling the addition to the current reference signal of a correction signal proportional to the square of the speed of the product to be cut, in such a way as to cause an accelerating torque corresponding with a speed variation imposed by the logic unit (Fig. 3).

Fig.1

Fig. 2

Fig. 3